# EUROPEAN PATENT APPLICATION

(11) **EP 1 524 069 A2**
(43) Date of publication of application: **20.04.2005**
(21) Application number: 04024385.9
(22) Date of filing: 13.10.2004
(51) Int. Cl.: B23Q 7/14, B25J 9/00

(54) **Manufacturing cell comprising a robot for conveying workpiece supports between a stocker and a manufacturing machine by means of a support conveying device**

(30) Priority: 15.10.2003 JP 2003355515
(71) Applicant: FANUC LTD, Minamitsuru-gun, Yamanashi 401-0597 (JP)
(72) Inventor: Fukada, Tetsuo, Minamitsuru-gun Yamanashi 403-0022 (JP)
(74) Representative: Schmidt, Steffen J., Dipl.-Ing.

(57) **Abstract**

The manufacturing cell includes a robot (4) provided with a traveling shaft slider (7) traveling along a traveling shaft device (6). A support conveying device (9,30) is attached to the traveling shaft slider (7) via a connecting arm (8). A plurality of supports (5) are stocked in a support stocker (3). An engaging device (15) is attached to a forward end portion of the robot arm (4). Pins (17) of the engaging device are engaged in pin holes (16) for engagement of the desired support (5) accommodated in the support stocker (3). When the support is pushed or pulled, it is put on the support conveying device (9,30). In this state of engagement, the traveling shaft (6) device is driven to move the robot (4). The support is positioned at a position of a manufacturing machine (1,2) to which the support (5) should be attached. When the robot is driven to push the support (5) on the support conveying device (9,30), the support is pushed out onto a table (12) of the manufacturing machine (1,2). As the support (5) is conveyed without being lifted up while the support is being put on the support conveying device (9,30), it is unnecessary to give a strong force for conveying the support (5).

## Description

### BACKGROUND OF THE INVENTION

### 1. Field of the Invention

The present invention relates to a manufacturing cell for conducting machine work on a workpiece.

### 2. Description of the Related Art

In the case of machining a workpiece by a manufacturing machine provided in a manufacturing cell, a support or holder corresponding to the workpiece is attached to the manufacturing machine, and then the workpiece is attached to the manufacturing machine by the support. The support is stocked in a support stocker. In order to take out a support, which is suitable for the workpiece to be machined, from the support stocker and attach the support to the manufacturing machine, a support conveying device for conveying the support is provided.

A conventional support conveying device includes: a traveling shaft device which moves between the support stocker and the manufacturing machine; an elevating shaft device for elevating the support; and a fork shaft device for inserting a fork below the support. The fork is inserted below the support stocked in the support stocker; the elevating shaft device is driven so as to elevate the support; and the traveling shaft device is driven in this state, so that the support can be conveyed to a position where the manufacturing machine is located.

According to the above conventional support conveying device, the support is elevated and conveyed. Therefore, it is necessary to provide a mechanism for holding the weight of the entire support. Accordingly, it is necessary to provide a drive source such as a motor capable of generating a high torque. In order to provide the above mechanism and drive source, the support conveying device becomes expensive and the cost of the entire manufacturing cell is increased.

### SUMMARY OF THE INVENTION

An object of the present invention is to provide an inexpensive manufacturing cell.

The present invention provides a manufacturing cell comprising: a manufacturing machine; a plurality of supports prepared corresponding to the type of a workpiece to be machined by the manufacturing machine; a support stocker for accommodating the plurality of supports; a support conveying device provided between the manufacturing machine and the support stocker; and a robot for conveying the support in a state in which the support is put on the support conveying device.

According to an embodiment, the robot includes a traveling shaft device and is capable of moving along the traveling shaft device, and the support conveying device includes a support conveying table attached to the robot and moved together with the robot.

The robot includes an engaging device capable of engaging with the support and, by engaging the engaging device with the support, the support can be moved under the condition that the support is put on the support conveying table between the support stocker and the support conveying table and also between the manufacturing machine and the support conveying table.

Further, while the support is being conveyed by the traveling shaft device, the engaging device is engaged with the support, so that the support can be prevented from coming down during the conveyance and the number of engaging/releasing actions of the support and the engaging device can be decreased.

According to another embodiment, the support conveying device includes a support conveying passage between the manufacturing machine and the support stocker, and the robot can convey the support under the condition in which the support is put on the support conveying passage.

The robot includes an engaging device capable of engaging with the support and is capable of conveying the support while the engaging device is engaged with the support.

The robot includes a holding device, whereby the robot is capable of attaching and detaching a workpiece to and from the support attached to the manufacturing machine. Therefore, the handling of the workpiece and the conveyance of the support can be conduced by one robot.

The manufacturing cell includes a workpiece clamping device having a function of clamping the workpiece to the support, and the robot includes a holding device. The support is once conveyed by the robot from the support stocker or the manufacturing machine to the workpiece clamping device, and the workpiece can be attached to and detached from the support.

The manufacturing cell further comprises an automatic hand changer, and the holding device is exchanged, according to the type of the workpiece, by the automatic hand changer.

### BRIEF DESCRIPTION OF THE DRAWINGS

The above and other objects, features and advantages of the present invention will be made more apparent, from the following description of the preferred embodiments thereof, after reference to the accompanying drawings wherein:
Fig. 1 is a block diagram showing a primary portion of the manufacturing cell of the present invention;
Figs. 2a and 2b are respectively an upper face view and right side view showing an outline of the first embodiment of the invention;
Figs. 3a and 3b are respectively an upper face view and right side view for explaining an engagement of the engaging device with the support in the first embodiment of the invention;
Figs. 4a to 4d are schematic illustrations for explaining actions in the first embodiment of the : invention;
Figs. 5a and 5b are schematic illustrations for explaining actions of attaching the workpiece to the support in the first embodiment of the invention, wherein Fig. 5a shows a state in which the work is being attached to the support and Fig. 5b shows a state in which the work has been already attached to the support;
Figs. 6a and 6b are respectively an upper face view and right side view showing an outline of the second embodiment of the invention; and
Fig. 7 is an upper face view showing an outline of the third embodiment of the invention.

### DETAILED DESCRIPTION

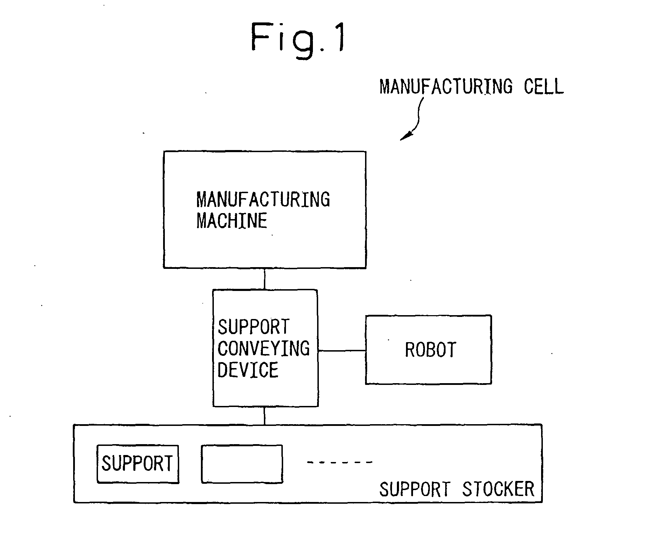

Fig. 1 is a block diagram showing a basic structure of the manufacturing cell of the present invention. A manufacturing cell comprises: a manufacturing machine; a plurality of supports prepared corresponding to the type of a workpiece to be machined by the manufacturing machine; a support stocker for accommodating the plurality of supports; a support conveying device provided between the manufacturing machine and the support stocker; and a robot for conveying the support in a state in which the support is put on the support conveying device.

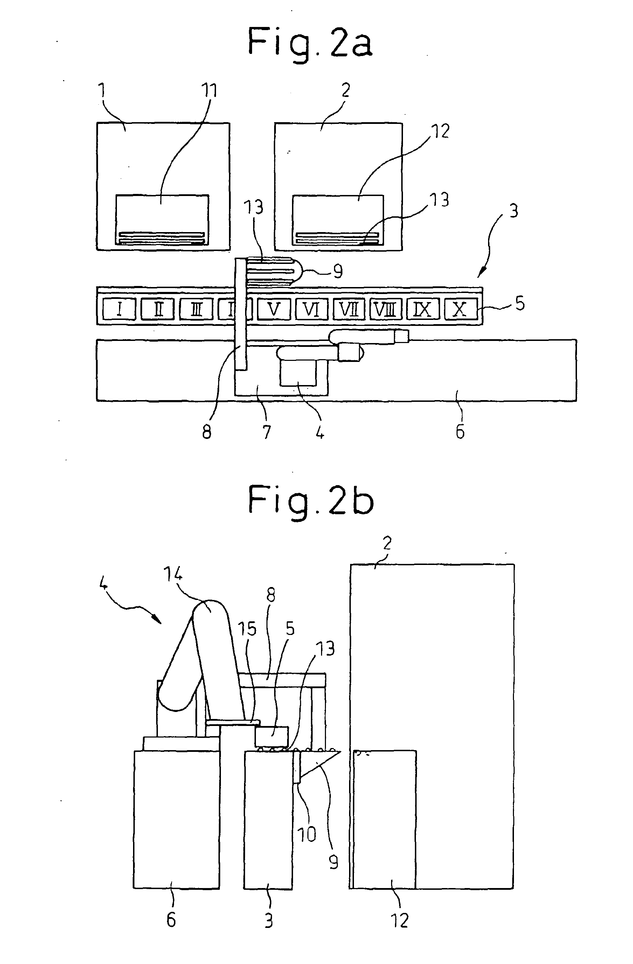

Figs. 2a and 2b are schematic illustrations showing a manufacturing cell of the first embodiment of the present invention. Fig. 2a is an upper face view and. Fig. 2b is a right side view. In this embodiment, the manufacturing cell includes two sets of manufacturing machines 1 and 2, a support stocker 3 and a robot 4. The support stocker 3 stocks a plurality of supports or workpiece holder 5. In the embodiment shown in Fig. 2a, ten types of supports 5 including types I to X are stocked. The robot 4 is attached to a traveling shaft device 6, and the traveling shaft device 6 has a traveling shaft slider 7 for moving the robot 4 along the traveling shaft device 6. The a traveling shaft slider 7 is attached with a support conveying table 9 as a support conveying device, through a connecting arm 8.

The support conveying table 9 is also supported by a linear guide 10 provided on the side of the support stocker 3 so that the support conveying table 9 can be guided. Rollers 13, capable of freely rotating so that the support 5 can be easily moved, are arranged in the support stocker 3, the support conveying table 9 and some portions of tables 11, 12 of the manufacturing machines 1, 2.

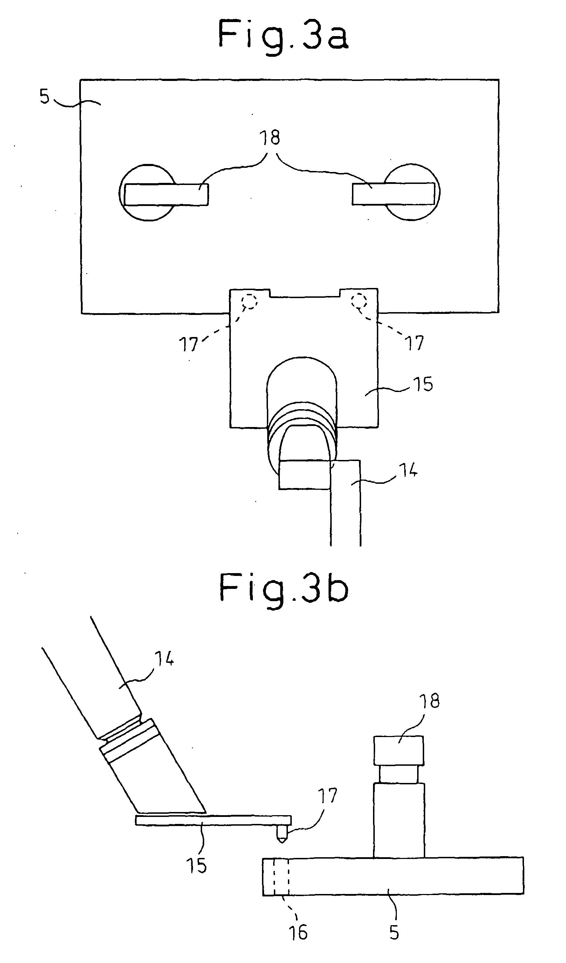

The robot 4 includes a movable robot arm 14, and a forward end portion of the robot arm 14 is provided with an engaging device 15 for connecting the robot arm 14 with the support 5. Figs. 3a and 3b are views for explaining a state of the engagement of the support 5 with the forward end portion of the robot arm due to the engaging device 15. Fig. 3a is an upper face view, and Fig. 3b is a right side view. Each support 5 has two pin holes 16 for engagement which are arranged at a predetermined distance. At the forward end portion of the engaging device 15, two pins 17 engaging with the pin holes 16 for engagement formed in the support are provided at the substantially same distance as that described before. This engaging device 15 is attached to the forward end portion of the robot arm 14. When these two pins 17 of the engaging device 15 are respectively inserted into the two pin holes 16 for engagement of the support 5, the engaging device 15 and the support 5 are engaged with each other. when the robot 4 pushes or pulls the support 5, the support 5 is made to come into contact with the rollers 13. While the rollers 13 rotate, the support 5 is moved on the rollers 13, so that the support 5 can be taken out from the support stocker 3 and put on the support conveying table 9. Further, the support 5 is moved and put from the support conveying table 9 onto the tables 11, 12 of the manufacturing machines 1, 2. Reference numeral 18 shown in Figs. 3a, 3b denotes an actuator of the support 5.

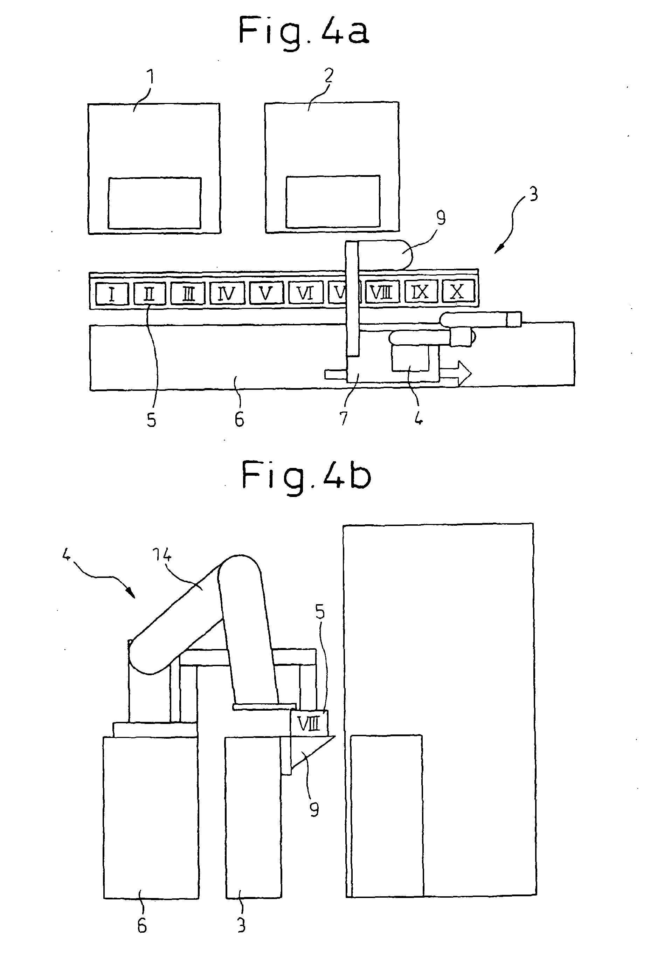

Figs. 4a to 4d, for explaining actions conducted in this embodiment, show actions conducted when the support 5 selected from the support stocker 3 is delivered to the manufacturing machine 1. Through a system controller, not shown, information of a workpiece to be machined by the manufacturing machine is notified to the manufacturing machine and the robot 4. In the embodiment shown in Figs. 4a to 4d, a workpiece is machined by the manufacturing machine 1, and the support 5 for the workpiece is stocked in the support stocker 3 at number VIII. The workpiece information includes a piece of information regarding the manufacturing machine 1 to be used for machining and a piece of information regarding the support 5 of the number VIII. The workpiece information is notified to the machine and the robot.

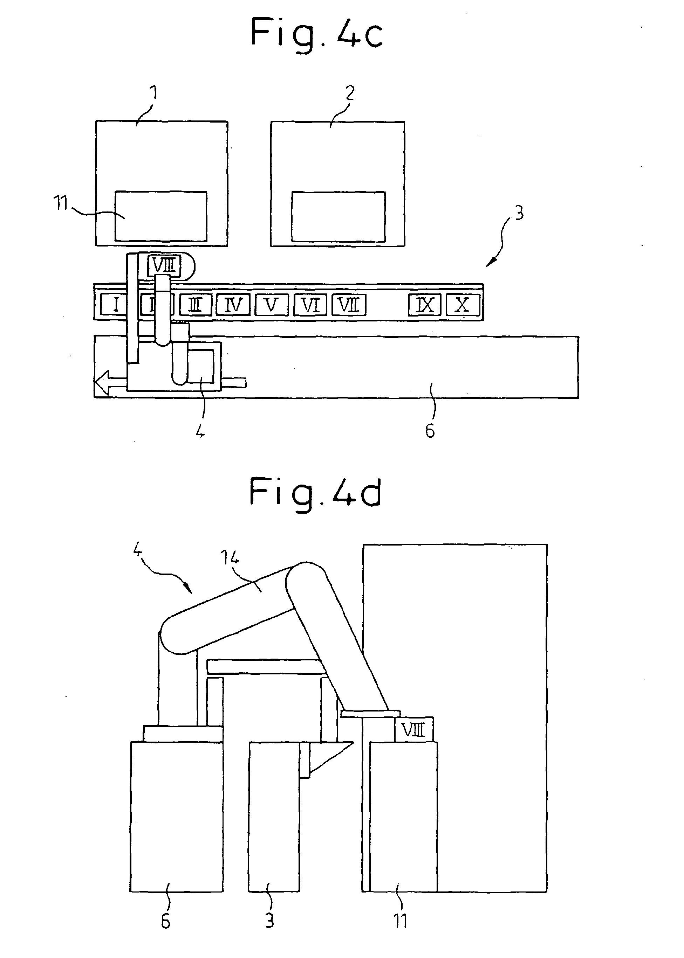

Then, as shown in Fig. 4a, the robot 4 drives the traveling shaft device 6 and moves the traveling shaft slider 7, so that the support conveying table 9 can be positioned at the support position of the number VIII in the support stocker 3 which has already been notified. Then, the robot arm 14 is driven, and the engaging pins 17 of the engaging device 15 are engaged in the engaging pin holes 16 of the support 5 at the number VIII. After that, as shown in Fig. 4b, the robot 4 moves the support 5 of the number VIII and pushes it out from the support stocker 3 onto the support conveying table 9. Further, under the condition that the engaging pin holes 16 of the support 5 of the number VIII and the engaging pins 17 of the engaging device 15 are engaged with each other, as shown in Fig. 4c, the traveling shaft device 6 of the robot 4 is driven so as to position the support conveying table 9 at a support introducing position of the manufacturing machine 1. Next, as shown in Fig. 4d, the robot arm 14 is driven so as to move the support 5, and the support 5 is pushed from the support conveying table 9 onto the table 11 of the manufacturing machine 1. After that, the engaging pin holes 16 of the support 5 and the engaging pins 17 of the engaging device 15 are released from each other. In this way, the setting of the support 5 at the manufacturing machine 1 is completed.

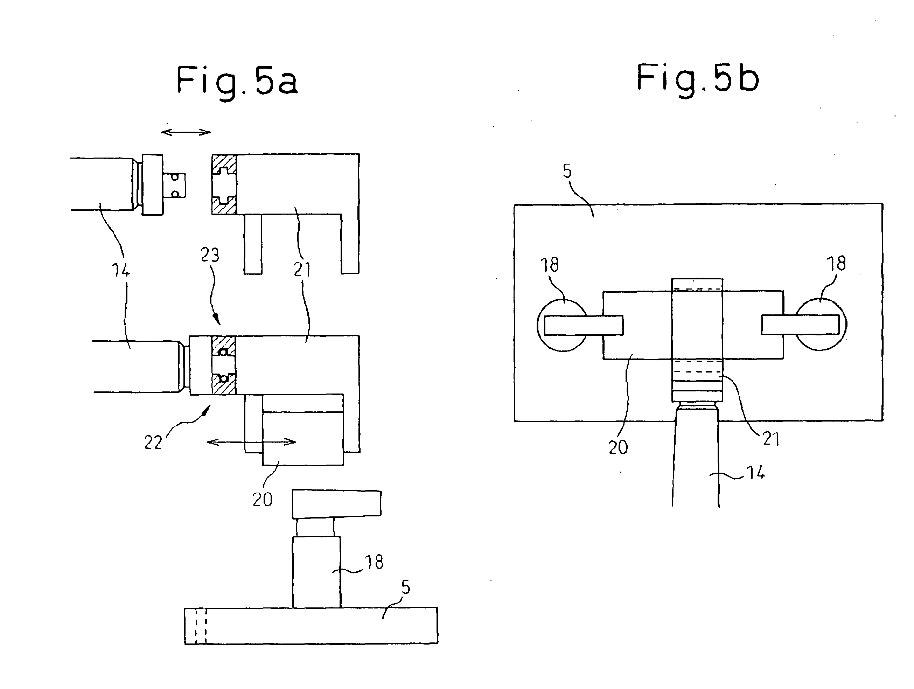

Next, by using an Automatic Hand Changer (AHC) 22 having, for example, a ball-lock mechanism 23 activated by air pressure, the engaging device 15 is detached from the forward end portion of the robot arm 14 and a holding device for holding the directed workpiece is attached to the forward end portion of the robot arm 14. Figs. 5a and 5b are schematic illustrations for explaining actions of attaching the workpiece 20 to the support 5 which is mounted on the manufacturing machine. The holding device or a hand 21 attached to the forward end portion of the robot arm 14 holds the workpiece 20 and moves it to a position where the workpiece 20 is attached to the support 5. (Fig. 5a is a view showing a state in the middle of attaching work.) The workpiece 20 is positioned at the above position. As shown in Fig. 5b, the actuator 18 of the support 5 is driven so as to attach the workpiece 20 to the support 5. After that, machining is conducted on the workpiece 20 by the manufacturing machine. After the completion of machining, the workpiece 20 is held by the hand 21, and operation of the actuator 18 of the support 5 is released. Then, the machined workpiece 20 is taken out from the support 5.

In the case of further exchanging the support, instead of the hand 21, the engaging device 15 is attached to the forward end portion of the robot arm 14 by the AHC 22. By a procedure opposite to the actions of taking out the support from the support stocker 3 and attaching it to the manufacturing machine 1, the robot is operated so that the support 5 can be accommodated in the support stocker 3. For example, the support number VIII attached to the manufacturing machine 1 is taken out from the manufacturing machine 1 and accommodated at the position of the number VIII of the support stocker 3. Even in this case, the robot 4 engages the engaging pin holes 16 of the support with the pins 17 of the engaging device 15 and pushes or pulls the support 5, so that the support 5 can be moved on the table 11, the support conveying table 9 and the support stocker 3.

As described above, the support 5 is moved while the roller 13 is being rotated, and after the support 5 has been put on the support conveying table 9, it is moved by being driven by the traveling shaft device of the robot 4. Therefore, it is unnecessary for the robot 4 to hold the entire weight of the support 5. Accordingly, it is unnecessary to provide a strong force and use a largesized robot. Especially, the manufacturing cell usually includes a workpiece handling robot for attaching a workpiece to the manufacturing machine and detaching the workpiece from the manufacturing machine. Therefore, by using the workpiece handling robot instead of the above robot 4, it is possible to utilize the workpiece handling robot for conveying and attaching the support. Due to the foregoing, an existing robot can be used for conveying the support, therefore, the cost of the entire manufacturing cell can be reduced.

During the conveyance of the support 5, the engaging pin holes 16 of the support and the pins 17 of the engaging device 15 are engaged with each other at all times. Therefore, the support 5 can be prevented from coming down from the support conveying table 9, and the number of times of engaging and releasing of the pins 17 and the engaging pin holes 16 can be decreased and the working efficiency can be enhanced.

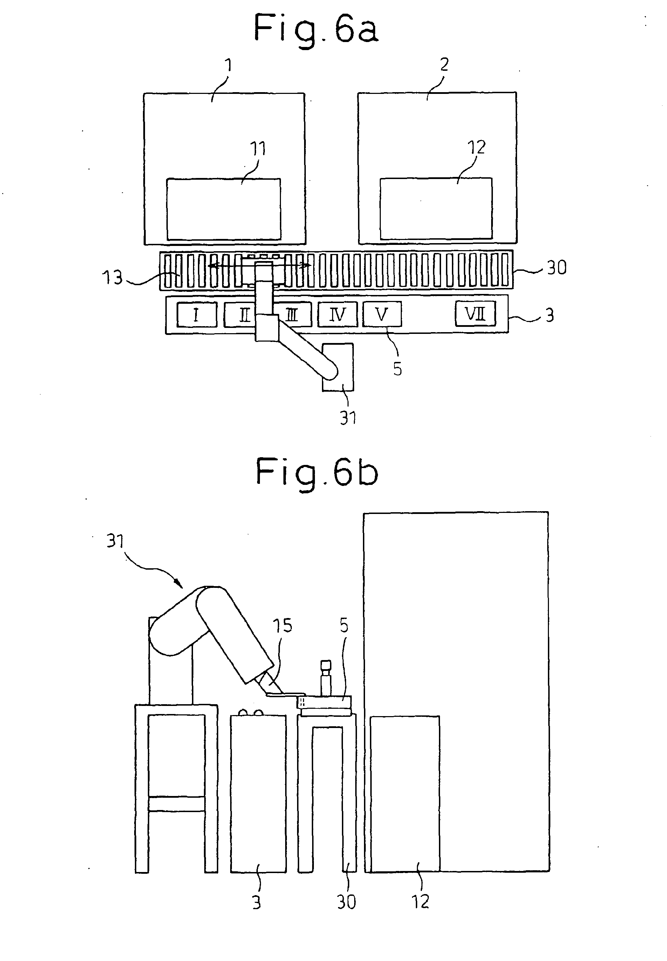

Figs. 6a and 6b are schematic illustrations for explaining the second embodiment of the invention. Fig. 6a is an upper face view, and Fig. 6b is a right side view. In these views, the same reference numbers are attached to the same components as in the first embodiment described before. Different points of this second embodiment from the first embodiment described before are that a support conveyance passage 30 is provided as the support conveying device instead of the support conveying table 9 and that a fixed robot 31 having no traveling shaft device is used. In this second embodiment, the robot having a traveling shaft device may be used in the same manner as that of the first embodiment. However, as long as a range of the movement of a fixed robot includes positions capable of accessing to the supports 5 accommodated in the support stocker 3, and also positions capable of accessing to the manufacturing machines, a robot having no traveling shaft device may be used. In the embodiment shown in Figs. 6a and 6b, two sets of manufacturing machines are provided and seven supports are accommodated in the support stocker 3. The robot 31 fixed at a predetermined position has a range of operation capable of accessing to the manufacturing machines 1, 2 and the seven supports 5.

In this second embodiment, the support 5 may be taken out from or accommodated in the support stocker 3 in the same manner as that of the first embodiment described before, and the support 5 may be attached to or detached from the manufacturing machines in the same manner as that of the first embodiment described before. Different points are described as follows. In the first embodiment, by activating the traveling shaft device of the robot, the support conveying table 9 is moved so that the support 5 can be moved. However, in this second embodiment, by the robot 31, the support 5 is moved on the conveyance passage 30 and moved from the support taking-out position of the support stocker 3 to the attaching position to the manufacturing machine and, in reverse, from the taking-out position of the manufacturing machine to the accommodating position of the support stocker.

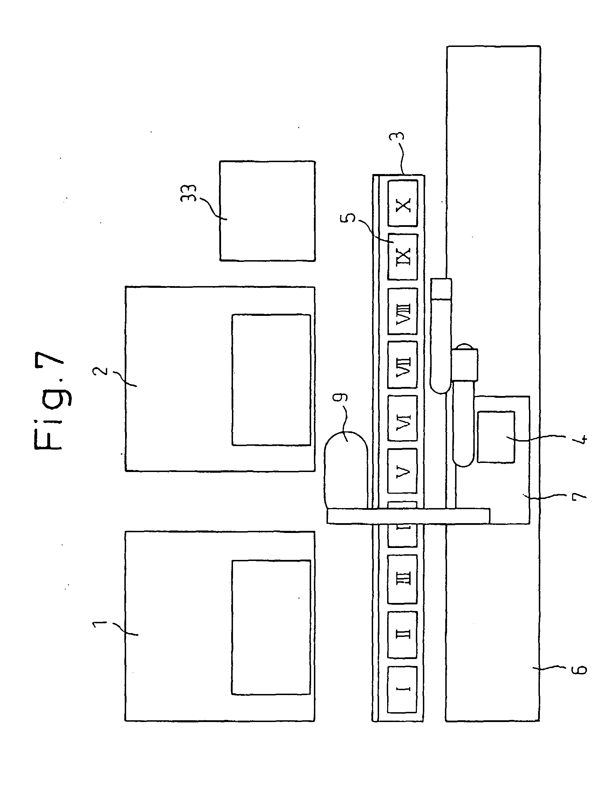

Fig. 7 is a view showing an outline of the third embodiment of the present invention. A different point of this third embodiment form the first embodiment is that a workpiece clamping device 33 is added. In this third embodiment, the workpiece is attached to and detached from the support 5 at the workpiece clamping device 33. When a system controller notifies the manufacturing machine and the robot of the workpiece information, the robot 4 takes out the corresponding support 5 from the support stocker 3 by the action described above and delivers the support 5 to the workpiece clamping device 33. After that, the robot 4 holds a workpiece and attaches the workpiece to the delivered support 5 by using the workpiece clamping device 33. Further, the support 5 to which the workpiece is attached is conveyed to the manufacturing machine and the support concerned is attached to the manufacturing machine. The robot 4 detaches the support 5 attached to the manufacturing machine, while the workpiece is being attached to the support 5. The robot 4 detaches the support 5 to the workpiece clamping device 33, and the workpiece is detached from the support 5 by the workplace clamping device 33. The robot 4 conveys the workpiece to the next process and accommodates the support 5 in the support stocker 3.

In each embodiment explained above, the hand 21 attached to the forward end portion of the robot arm 14 is exchanged with the engaging device 15, or vice versa, by using the AHC. However, the engaging device 15 has a simple structure in which the pins 17 of the engaging device 15 is inserted into and engaged with the engaging pin holes 16 provided in each support 5. (By this engagement, the support is given a pushing or pulling force so that the support can be moved. Therefore, the engagement is not limited to the pins and the pin holes, for example, the engagement may be accomplished by a groove and a plate to be engaged with the groove.) Therefore, the engaging device 15 may be fixed to a forward end portion of the robot arm of the robot 4. It is possible to employ the structure in which each hand is provided with this engaging device and an exchanging and attaching work of the hand and the engaging device may be abolished.

The support is conveyed while it is being put on the support conveying device without being lifted up. Therefore, it is unnecessary to provide a strong force to the support, and it is possible to convey the support by a small-sized robot. Therefore, a work handling robot used for attaching a workpiece to the manufacturing machine and detaching the workplace from the manufacturing machine can be also used for conveying the support. Accordingly, it is possible to obtain an inexpensive manufacturing cell.

While the invention has been described with reference to specific embodiments chosen for the purpose of illustration, it should be apparent that numerous modification could be made thereto by those skilled in the art without departing from the basic concept and scope of the invention.

## Claims

1. A manufacturing cell comprising:
a manufacturing machine;
a plurality of supports prepared corresponding to the type of a workpiece to be machined by. the manufacturing machine;
a support stocker for accommodating the plurality of supports;
a support conveying device provided between the manufacturing machine and the support stocker; and
a robot for conveying the support in a state in which the support is put on the support conveying device.

2. The manufacturing cell as set forth in claim 1, wherein the robot includes a traveling shaft device and is capable of moving along the traveling shaft device, and the support conveying device includes a support conveying table attached to the robot and moved together with the robot.

3. The manufacturing cell as set forth in claim 2, wherein the robot includes an engaging device capable of engaging with the support and, by engaging the engaging device with the support, the support can be moved under the condition that the support is put on the support conveying table between the support stocker and the support conveying table and also between the manufacturing machine and the support conveying table.

4. The manufacturing cell as set forth in claim 3, wherein the engaging device is engaged with the support while the support is being conveyed by the traveling shaft device.

5. The manufacturing cell as set forth in claim 1, wherein the support conveying device includes a support conveying passage between the manufacturing machine and the support stocker, and the robot can convey the support under the condition in which the support is put on the support conveying passage.

6. The manufacturing cell as set forth in claim 5, wherein the robot includes an engaging device capable of engaging with the support and is capable of conveying the support while the engaging device is being engaged with the support.

7. The manufacturing cell as set forth in claim 1, wherein the robot includes a holding device, whereby the robot is capable of attaching and detaching a workpiece to and from the support attached to the manufacturing machine.

8. The manufacturing cell as set forth in claim 7, wherein the manufacturing machine further comprises an automatic hand changer, and the holding device is exchanged according to the type of a workpiece by the automatic hand changer.

9. The manufacturing cell as set forth in claim 1, wherein the manufacturing cell further comprises a workpiece clamping device having a function of clamping a workpiece to the support, and the robot includes a holding device, conveys the support once from the support stocker or the manufacturing machine to the workpiece clamping device, and attaches and detaches the workpiece to and from the support.

10. The manufacturing cell as set forth in claim 9, wherein the manufacturing machine further comprises an automatic hand changer, and the holding device is exchanged, according to the type of a workpiece, by the automatic hand changer.
